Europäisches Patentamt

European Patent Office

Office européen des brevets

(11) Numéro de publication : **0 441 706 B1**

(19)

(11)

# (12) FASCICULE DE BREVET EUROPEEN

(45) Date de publication du fascicule du brevet :
**10.05.95 Bulletin 95/19**

(51) Int. Cl.$^6$ : **G05D 1/10**

(21) Numéro de dépôt : **91400289.4**

(22) Date de dépôt : **07.02.91**

(54) Calculateur de missile.

(30) Priorité : **08.02.90 FR 9001479**

(43) Date de publication de la demande :
**14.08.91 Bulletin 91/33**

(45) Mention de la délivrance du brevet :
**10.05.95 Bulletin 95/19**

(84) Etats contractants désignés :
**BE CH DE ES GB GR IT LI NL SE**

(56) Documents cités :
**EP-A- 0 200 352
US-A- 4 037 202
IEEE Computer Society: Proceedings Real-
Time Systems Symposium, 6-8 Décembre 1988
Huntsville, Alabama US pages 60 - 68; R. Bond
etal.: "Missile Guidance Processor Software
Development: A Case Study"**

(73) Titulaire : **AEROSPATIALE Société Nationale
Industrielle
37, Boulevard de Montmorency
F-75781 Paris Cédex 16 (FR)**

(72) Inventeur : **Bedel, Philippe
19, rue Caillaux
F-75013 Paris (FR)**
Inventeur : **Patin, Paul Guy
8, rue René Aubert
F-78000 Versailles (FR)**
Inventeur : **Kononow, Mierzislaw
6, avenue Georges Clémenceau
F-92330 Sceaux (FR)**

(74) Mandataire : **Joly, Jean-Jacques et al
Cabinet Beau de Loménie
158, rue de l'Université
F-75340 Paris Cédex 07 (FR)**

EP 0 441 706 B1

## Description

La présente invention concerne un calculateur de missile.

Un calculateur de missile a pour fonction essentielle le pilotage automatique du missile. A ce titre, il effectue les calculs nécessaires à la navigation, au pilotage et au guidage du missile, et il adapte et gère à cet effet les informations d'entrée/sortie nécessaires. Le calculateur participe à la séquence de tir et de vol, et il rassemble et envoie à une liaison de télémesure les paramètres retenus pour le plan mesure.

Le document:

IEEE Computer Society, Proceedings on Real-Time System Symposium, 6-8 Decembre 1988, Huntsville, Alabama(US), pages 60-68 ; R. Bond et al: "Missile guidance Processor software Developpement : A Case Study", décrit un tel calculateur de missile.

L'amélioration des performances d'un missile demande une augmentation de la puissance de calcul du calculateur embarqué. Toutefois, cette augmentation doit être obtenue en conservant un volume réduit, voire en diminuant celui-ci, et sans entraîner de coûts prohibitifs pour le développement du calculateur et la fabrication de ses composants.

La présente invention a pour but de proposer une architecture de calculateur de missile conférant à celui-ci une puissance de traitement fortement accrue tout en respectant de telles conditions.

Ce but est atteint grâce à un calculateur de missile tel que défini dans la revendication 1.

L'utilisation de processeurs spécialisés pour effectuer les calculs correspondant aux traitements algorithmiques et pour effectuer les traitements relatifs à des échanges d'informations avec une ou plusieurs liaisons externes permet de décharger l'unité centrale. Celle-ci assume alors la gestion des tâches accomplies par le calculateur, la gestion des informations d'entrée/sortie en provenance de et vers les liaisons externes et les échanges avec l'unité de traitement algorithmique. Cette gestion est indépendante des unités de traitement algorithmique et d'entrées-sorties permettant ainsi par simple remplacement de moduler les performances de l'ensemble.

Cette architecture particulière du calculateur procure l'augmentation de puissance de traitement recherchée, et ce sans augmentation de volume, notamment en faisant appel à des circuits intégrés avec une intégration à très grande échelle (VLSI), et avec une consommation et un échauffement réduits, notamment par utilisation de la technologie CMOS.

L'invention sera mieux comprise à la lecture de la description faite ci-après, à titre indicatif mais non limitatif, en référence aux dessins annexés sur lesquels :

- la figure 1 est une vue très schématique montrant l'implantation de différents organes d'un missile,
- la figure 2 est un diagramme fonctionnel d'un mode de réalisation d'un calculateur conforme à l'invention,
- la figure 3 est un diagramme plus détaillé de l'unité centrale et des mémoires associées faisant partie du calculateur de la figure 2,
- la figure 4 illustre l'organisation de l'espace mémoire du processeur de l'unité centrale,
- la figure 5 montre un mode de réalisation du circuit de gestion de l'espace mémoire du processeur de l'unité centrale,
- la figure 6 est un diagramme plus détaillé de l'unité de traitement algorithmique faisant partie du calculateur de la figure 2,
- la figure 7 est un diagramme plus détaillé du circuit de couplage série faisant partie du calculateur de la figure 2,
- la figure 8 montre un mode de réalisation d'un circuit logique faisant partie du circuit de couplage de la figure 7,
- la figure 9 est un diagramme plus détaillé des autres circuits d'entrée/sortie faisant partie du calculateur de la figure 2, et
- la figure 10 montre un mode de réalisation d'un circuit logique faisant partie du circuit de couplage parallèle de la figure 9, et
- la figure 11 est un diagramme montrant les lignes d'interruption et les chemins de données entre les circuits constitutifs du calculateur de la figure 2 et entre ceux-ci et les liaisons extérieures aboutissant au calculateur.

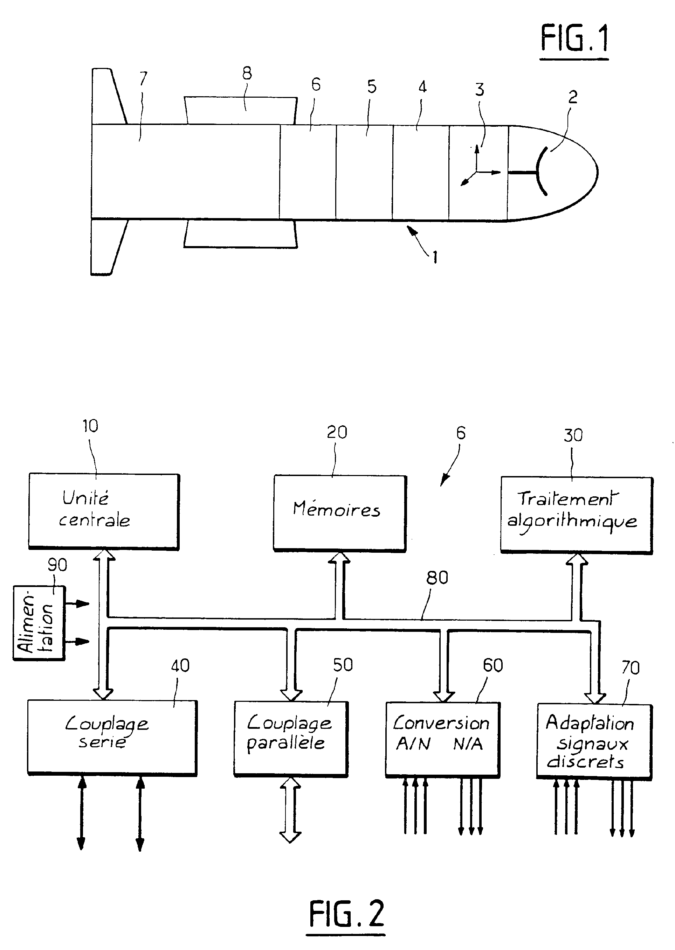

Comme le montre la figure 1 d'une façon très schématique, un missile 1 peut comporter, de l'avant à l'arrière, un dispositif auto-directeur 2, une centrale à inertie avec un bloc senseur 3, une charge 4, une fusée de proximité 5, un calculateur 6 et un système propulsif 7. Ce dernier peut comprendre au moins une tuyère de propulsion axiale orientable, ou non et des tuyères de pilotage latérales. Des gouvernes aérodynamiques 8 orientables sont fixées sur le corps du missile. Dans cet exemple, chacun des constituants 1 à 6 du missile occupe un tronçon de celui-ci.

Le calculateur 6 effectue principalement les calculs nécessaires à la navigation, au pilotage et au guidage du missile. A cet effet, le calculateur 6 reçoit notamment des informations provenant d'un poste de tir ou de contrôle et reçues par un récepteur de liaison radar missile (non représenté sur la figure 1), ainsi que des informations fournies par le dispositif auto-directeur 2 (lorsque la cible a été "accrochée") et le bloc senseur 3, et des informations fournies par des capteurs et représentatives des positions de tuyère(s) et de gouvernes. Le calculateur fournit des informations de commande de position de tuyère(s) et de gouvernes et des informations de commande de la fusée de proximité 5.

Le calculateur 6 élabore aussi des informations de télémesure qui sont transmises au centre de tir ou de contrôle et qui représentent un certain nombre de paramètres prédéterminés. Le calculateur 6 participe en outre à la séquence de tir.

Un diagramme fonctionnel du calculateur 6 est illustré par la figure 2.

Le calculateur 6 comprend essentiellement une unité centrale 10, des circuits de mémoire 20 associés à l'unité centrale, une unité de traitement algorithmique 30, un circuit de couplage série 40 reliant le calculateur à des bus de données numériques séries externes, un circuit de couplage parallèle 50 reliant le calculateur à un bus numérique parallèle externe, un circuit 60 de conversion analogique/numérique (A/N) et numérique/analogique (N/A) reliant le calculateur à des liaisons analogiques externes et un circuit 70 d'adaptation de signaux discrets reliant le calculateur à des liaisons analogiques externes. Ces différents constituants du calculateur sont interconnectés par un bus interne 80 et reçoivent les tensions d'alimentation nécessaires d'un circuit d'alimentation 90.

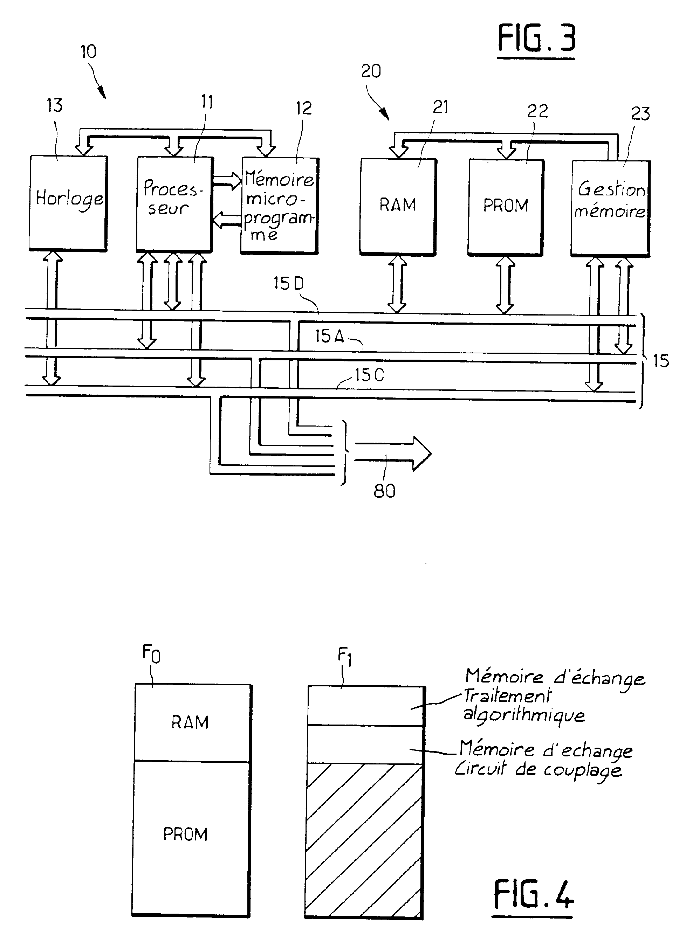

L'unité centrale 10 (figure 3) est organisée autour d'un processeur microprogrammable 11. Elle comprend en outre une mémoire de microprogramme 12 et un circuit 13 de gestion du temps et des interruptions ; tous deux connectés à l'unité centrale 10.

L'unité centrale 10 a en charge la gestion des tâches accomplies par le calculateur, la gestion des informations d'entrée/sortie en provenance et vers les bus et liaisons externes et les échanges avec l'unité de traitement algorithmique 30.

Le processeur 11 est un processeur de type microprogrammable de préférence réalisé en technologie CMOS afin de minimiser la consommation et l'échauffement.

Le processeur 11 et le circuit 13 sont connectés à un bus 15 qui comprend un bus de données 15D, par exemple sur 16 bits, un bus d'adresses 15A, par exemple également sur 16 bits, et un bus de contrôle 15C, par exemple sur 10 bits. Le bus interne 80 du calculateur est une extension du bus 15 de l'unité centrale.

Le circuit 13 a pour fonctions la génération de signaux d'horloge de base du calculateur, la génération des signaux d'horloge temps réel, la gestion des interruptions et des tâches et l'arbitrage de l'accès au bus interne du calculateur. Le circuit 13 peut être réalisé sous forme d'un circuit intégré spécifique.

La structure de l'unité centrale 10 est donc tout à fait classique, de sorte qu'une description plus détaillée n'est pas ici nécessaire.

Les circuits de mémoire 20 (figure 3) comprennent une mémoire vive (RAM) 21, une mémoire d'application 22 de type PROM et un circuit 23 de gestion de la mémoire.

Comme le montre la figure 4, l'espace mémoire est partagé en feuilles, celles-ci étant au nombre de deux (F0, F1) dans l'exemple illustré. L'adresse d'un mot en mémoire comprend le numéro de la feuille sélectionnée, numéro indiqué par un registre de feuille qui est chargé par l'unité centrale et qui fait partie du circuit 23, et les 15 bits de poids faible du bus d'adresse, qui sont stockés dans un registre d'adresse faisant partie du circuit 23.

La feuille F0 constitue la mémoire privée du processeur 11 de l'unité centrale et est partagée en une première partie constituant la mémoire vive privée RAM et une deuxième partie constituant la mémoire privée PROM.

Cette dernière contient les programmes d'application mis en oeuvre par l'unité centrale. D'autres programmes d'application sont stockés en mémoire PROM dans l'unité de traitement algorithmique pour les opérations effectuées par cette dernière.

La feuille F1 comprend deux segments de mémoire RAM, l'un formant mémoire d'échange avec l'unité de traitement algorithmique, l'autre formant mémoire d'échange avec les circuits de couplage. Les zones d'échanges sont dans le champ d'adresses mais non entrelacées ; l'alignement est fait par le compilateur.

La mémoire est du type entrelacé pour pouvoir présenter simultanément deux octets sur le bus de données 15D, bien que l'unité centrale adresse des octets. Ainsi, l'espace mémoire est partagé en une mémoire paire contenant tous les octets d'adresse paire et une mémoire impaire contenant tous les octets d'adresse impaire.

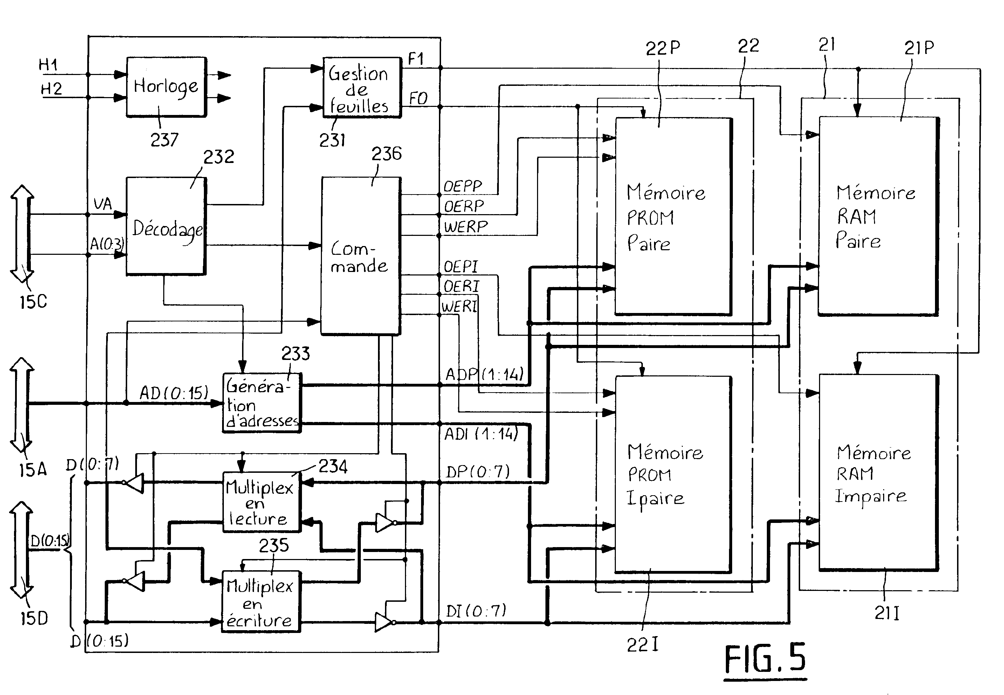

La figure 5 montre de façon détaillée un mode de réalisation du cirucit de gestion 23 et des mémoires gérées par ce circuit. La mémoire RAM 21, qui constitue notamment la feuille F1 est partagée en une mémoire paire 21P et une mémoire impaire 21I qui peuvent être constituées par des circuits distincts. De même, la mémoire PROM 22, qui fait partie de la feuille F0, est partagée en une mémoire paire 22P et une mémoire impaire 22I.

Le circuit de gestion 23 comprend un circuit de gestion de feuilles 231 qui comporte un registre de feuille dans lequel est chargé le numéro de la feuille sélectionnée. Le changement est effectué avec la valeur délivrée par le bit D (0) du bus de données 15D sous la commande d'un signal produit par un circuit de décodage 232 en réponse à un micro-ordre transmis dans un champ du bus de contrôle 15C, par exemple le champ A (0 : 3). Le circuit de décodage 232 reçoit aussi un signal VA de validation du champ A en provenance de l'unité centrale.

Bien entendu, le circuit de gestion de feuille pourra gérer un nombre de feuilles supérieur à deux. Le numéro de la feuille sélectionnée sera alors donné par deux bits D (0 : 1), ou plus si nécessaire, du bus de données 15D.

Un circuit 233 de génération d'adresses reçoit les mots d'adresses transmis sur le bus d'adresses 15A et élabore en conséquence les adresses ADP (1 : 14) et ADI (1 : 14) à transmettre sur les bus d'adresses des mémoires paires et des mémoires impaires, respectivement. La mise à jour de ces bus n'est réalisée qu'au cours d'un cycle de lecture ou d'écriture, en réponse à la réception d'un micro-ordre de lecture ou d'écriture décodé par le circuit 232. Les adresses ADP (1 : 14) et ADI (1 : 14) sont par exemple obtenues à partir des adresses AD (0 : 15) transmises sur le bus 15A de la manière suivante :

ADI (1 : 14) = AD (0 : 14)/2, et
ADP (1 : 14) = AD (0 : 14)/2 + AD (0).

Ainsi, dans le cas d'un échange simultané sur deux octets, si l'adresse fournie par l'unité centrale est impaire, l'octet LSB représenté par les 8 bits de poids les plus faibles sur le bus 15D sera lu ou écrit en mémoire paire et l'octet MSB représenté par les 8 bits de poids les plus forts sur le bus 15D sera lu ou écrit en mémoire impaire. Il en va inversement si l'adresse est paire. Le tableau ci-après résume la destination ou la provenance des données selon que l'échange est effectué sur un ou deux octets et en fonction de la parité de l'adresse donnée par le bit AD (0) sur le bus 15A.

|  | nature de l'échange | MSB lu ou écrit en mémoire | LSB lu ou écrit en mémoire |
|---|---|---|---|
| AD(0)=0 | 1 octet | - | paire |
|  | 2 octets | paire | impaire |
| AD(0)=1 | 1 octet | - | impaire |
|  | 2 octets | impaire | paire |

L'utilisation d'une mémoire entrelacée oblige donc un multiplexage des bus de données en lecteure et en écriture. Ceci est réalisé au moyen d'un circuit 234 de multiplexage en lecture et un circuit 235 de multiplexage en écriture. Le circuit 234 reçoit des octets transmis sur les bus de données DP (0 : 7) et DI (0 : 7) affectés au mémoires paires et impaires, respectivement, et les distribue en position LSB ou MSB sur le bus de données 15D. Le circuit 235 reçoit les octets LSB et MSB et les distribue sur les bus DP (0 : 7) ou DI (0 : 7). Les circuits 234 et 235, ainsi que des portes connectées en sortie de ces circuits, sont commandés par un circuit de commande 236 en réponse au décodage, par le circuit 232, de micro-ordres de lecture ou d'écriture sur un octet ou deux octets.

En réponse aux micro-ordres décodés par le circuit 232 et selon la parité de l'adresse, le circuit 236 fournit également des signaux OEPP, OERP, WERP d'autorisation de lecture en mémoire PROM paire, d'autorisation de lecture en mémoire RAM paire et d'autorisation d'écriture en mémoire RAM paire, ainsi que des signaux OEPI, OERI et WERI d'autorisation de lecture en mémoire PROM impaire, d'autorisation de lecture en mémoire RAM impaire et d'autorisation d'écriture en mémoire RAP impaire.

Le fonctionnement des circuits constitutifs du circuit de gestion 23 est synchronisé par un circuit d'horloge 237 recevant des signaux d'horloge de l'unité centrale.

L'unité de traitement algorithmique 30 a pour fonction d'effectuer des calculs très rapidement et en virgule flottante.

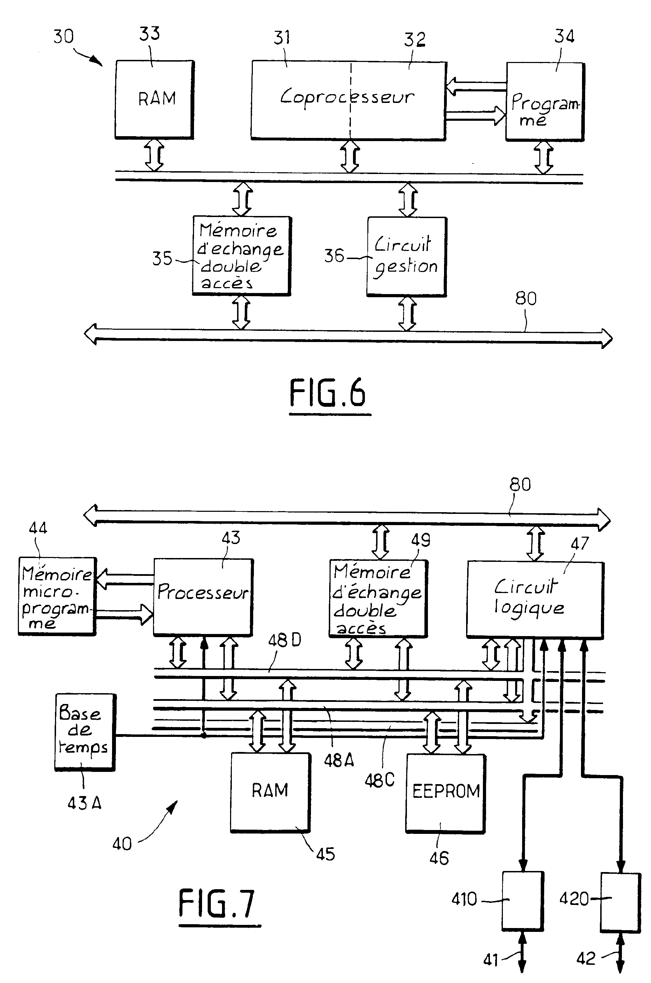

A cet effet, l'unité de traitement 30 (figure 6) est par exemple formée par un coprocesseur utilisant un processeur 31 type "29000" associé à un processeur accélérateur virgule flottante 32 type "29027", tous deux commercialisés par la société des Etats-Unis d'amérique "AMD" ("Advanced Micro Devices").

L'unité de traitement 30 comprend en outre ses propres mémoires adressées par le coprocesseur 31-32 : une mémoire vive 33 (RAM) et une mémoire de programme 34 (PROM). Cette dernière contient les programmes nécessaires à l'exécution des traitements par le coprocesseur et fournit les instructions correspondantes à celui-ci. Ces traitements consistent essentiellement dans des calculs classiques de navigation guidage et pilotage pour fournir les informations de commande de gouvernes à partir d'informations fournies par le système auto-directeur et le bloc senseur et celles reçues par la liaison radar missile.

Le dialogue entre l'unité de traitement algorithmique 30 et l'unité centrale 10 se fait par l'intermédiaire d'une mémoire d'échange à double accès 35 interposée entre le bus du coprocesseur 31-32 et le bus interne 80 du calculateur. Un circuit 36 gère l'accès à la mémoire d'échange 35 en lecture et en écriture.

Le circuit de couplage 40 (figure 7) a pour fonction de coupler le calculateur à des liaisons série, en l'espèce un bus 41 et une liaison 42.

Un bus 41 relie le calculateur au récepteur de liaison radar missile, et à l'émetteur de télémesure embarqués.

Au lancement, le bus 41 est également utilisé pour la liaison avec l'installation de tir. Le bus 41 est par exemple un bus série à deux fils de type "1553".

La liaison 42 relie le calculateur à la fusée de proximité 5. La liaison 42 est par exemple une liaison numérique simple bidirectionnelle asynchrone de type RS232 pour la procédure et de type RS422 pour la couche physique.

Le circuit de couplage 40 est un coupleur "intelligent" organisé autour d'un processeur microprogrammable 43 réalisé de préférence en technologie CMOS.

Le processeur 43 fait fonction d'automate arithmétique et logique microprogrammé recevant des instructions d'une mémoire de microprogramme 44. Les procédures de communication sur le bus 41 et la liaison 42 et les procédures d'échange avec l'unité de traitement 10 sont contenues dans la mémoire 44.

Le circuit de couplage 40 comprend encore une mémoire vive (RAM) 45, une mémoire non volatile effaçable et réinscriptible (EEPROM) 46, et un circuit logique 47 connecté à des circuits 410 et 420 formant interface avec le bus 41 et la liaison 42. Les mémoires 45, 46 et le circuit logique 47 sont couplés au bus de données 48D et au bus d'adresses 48A du processeur 43.

La mémoire non volatile 46 sert à mémoriser la trame des paramètres envoyés à la télémesure. Cette mémoire est chargée au stade de la fabrication par l'intermédiaire du bus 41 à l'aide d'une procédure microprogrammée contenue dans la mémoire 44. Ainsi, la trame des paramètres à télémesurer peut-elle être facilement changée d'une fabrication à une autre. En outre, si une modification de la trame des paramètres est souhaitée, par exemple au cours d'une campagne d'essais, cette modification peut être très simplement réalisée par effacement et réinscription dans la mémoire 46 sous la commande du processeur 43.

La mémoire vive 45 est utilisée pour les traitements microprogrammés effectués par le processeur 43. Elle peut également être utilisée comme mémoire de sauvegarde lorsque le processeur est interrompu.

Le circuit logique 47 assure la sérialisation des informations à émettre sur le bus 41 et la liaison 42, ainsi que le décodage et la désérialisation des informations reçues du bus 41 et de la liaison 42. A cet effet, le circuit logique 47 comprend des registres tampons pour le stockage intermédiaire des informations. En outre, le circuit logique 47 reçoit des signaux d'horloge provenant d'une base de temps 43A qui fournit également les signaux d'horloge nécessaires au fonctionnement du processeur 43. Le circuit 47 est encore relié au bus de contrôle 48C du processeur 43 et au bus de contrôle faisant partie du bus 80, ceci afin de recevoir de l'unité centrale des micro-ordres transmis sur ce dernier bus de contrôle.

Le dialogue entre le circuit de couplage 40 et l'unité de traitement 10 est réalisé par l'intermédiaire d'une mémoire d'échange à double accès 49. Celle-ci est connectée, d'un côté, au bus interne 80 du calculateur et, de l'autre côté, aux bus de données 48D et d'adresses 48A du processeur 43.

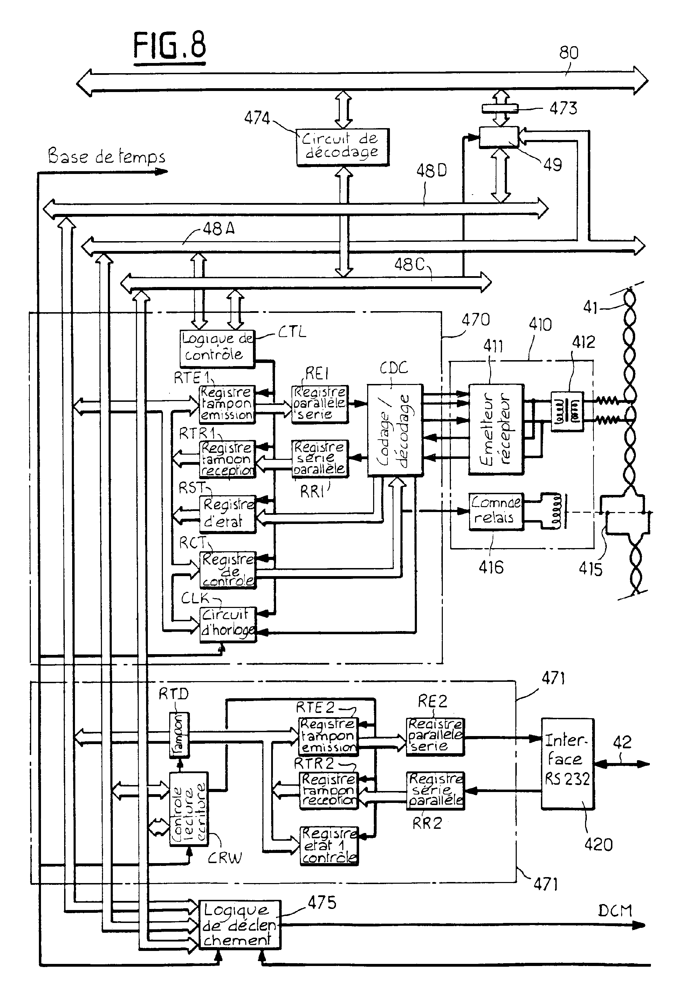

La figure 8 montre de façon plus détaillée un mode de réalisation du circuit logique 47. Celui-ci fait également l'objet de la demande de brevet français FR-A- 90 001479 déposée par la déposante de la présente demande, simultanément avec celle-ci. Le circuit 47 comprend essentiellement : un premier circuit de ligne série 470 interposé entre les bus 48D, 48A et 48C du processeur 43 et le circuit d'interface 410, un deuxième circuit de ligne série 471 interposé entre les bus 48D, 48A, et 48C et le circuit d'interface 420, un circuit 472 de déclenchement de charge militaire, un amplificateur bidirectionnel (buffer) 473 interposé entre le bus de données du bus 80 et le bus de données 48D, un circuit de décodage 474 interposé entre le bus de contrôle du bus 80 et le bus de contrôle 48C, et un circuit 475 de déclenchement de charge militaire.

L'amplificateur bidirectionnel (buffer) 473 est commandé par le bus de contrôle 48C.

Le circuit de décodage 474 reçoit des micro-ordres transmis sur le bus de contrôle du bus 80, depuis l'unité centrale 10, et les décode pour transmettre les commandes correspondantes sur le bus de contrôle 48C.

Le circuit de ligne 470 effectue essentiellement la transformation parallèle/série, le codage/décodage et la détection des erreurs de transmission. Il comprend deux registres d'émission RTE1 et RE1, deux registres de réception RR1 et RTR1, un circuit de codage/décodage CDC, un registre d'état RST, un registre de contrôle RCT, un circuit d'horloge CLK et un circuit logique de contrôle CTL.

Le registre d'émission RTE1 est un registre tampon dans lequel le stockage est commandé par le circuit CTL, et qui est interposé entre le bus de données 48D et l'entrée parallèle du registre d'émission RE1 à entrée parallèle et sortie série. Cette dernière est reliée à l'entrée de codage du circuit CDC.

Le registre de réception RTR1 est un registre tampon dans lequel le stockage est également commandé par le circuit CTL, et qui est interposé entre la sortie parallèle du registre de réception RR1 à entrée série et sortie parallèle et le bus de données 48D. L'entrée série du registre RE est reliée à la sortie de décodage du circuit CDC.

Le registre de contrôle RCT est chargé à partir du bus de données 48D, sous la commande du circuit CTL, et est lu par le circuit de codage/décodage CDC. De façon classique, le mot contenu dans le registre de contrôle est formé de bits qui, selon qu'ils sont ou non positionnés à 1, provoquent :
- l'émission d'un mot sur le bus 41,
- la génération d'une impulsion de synchronisation caractérisant un mot de donnée ou un mot de commande ou d'état, pour le mot à émettre,
- l'inhibition de l'émission,
- la désactivation de la partie décodeur du circuit CDC, lorsque le bus 41 est au repos (pour éviter la prise en compte de réceptions parasites),
- la validation du circuit d'horloge,

Le registre d'état est chargé à partir du circuit de codage/décodage CDC, sous la commande du circuit CTL et son contenu est disponible sur le bus de données 48D. Egalement de façon classique, le mot contenu dans le registre d'état est formé de bits qui, selon qu'ils sont ou non positionnés à 1, indiquent :
- la nature d'un mot reçu : mot de commande ou d'état, ou mot de donnée,
- une erreur dans le mot reçu,
- l'inhibition de l'émission par le circuit de protection,
- la transmission de mots sur le bus 41,
- un dépassement de capacité en réception,
- l'absence de réponse à une commande dans un délai prédéterminé,

Le circuit de codage/décodage CDC effectue la conversion des données parallèles fournies sur le bus 48D en données série codées selon la norme du bus 41 de type "1553". Du côté codage (émission), le circuit CDC comprend un circuit de protection qui inhibe l'émission lorsqu'une transmission excède une durée prédéterminée. Du côté décodage (réception), le circuit CDC comprend un filtre destiné à éliminer les signaux parasites et un décodeur assurant la conversion des données série codées selon la norme "1553" en mots utilisables par le processeur 43.

Le circuit d'horloge CLK permet d'effectuer une datation des temps de réponse des abonnés connectés sur le bus 41. Il comprend un compteur incrémenté par un signal d'horloge provenant de la base de temps 43A et un registre préchargé à partir du bus de données 48D, sous la commande du circuit CTL. Le registre est préchargé à une valeur correspondant à un temps de réponse maximum prédéterminé. Le compteur est déclenché en réponse à un signal du circuit CDC à l'émission d'un mot et stoppé en réponse à un signal du circuit CDC à la réception d'un mot. Le dépassement par le compteur de la valeur préchargée dans le registre commande une interruption vers le processeur 43.

Le circuit logique de contrôle CTL décode les mots reçus du bus de contrôle 48C et du bus d'adresses 48A pour élaborer les signaux de contrôle des registres tampons RTE1, RTR1, du registre de contrôle RCT et du registre d'état RST et du circuit d'horloge CLK.

Les sorties d'émission TX et entrées de réception RX de circuit CDC, ainsi qu'une sortie TXINH d'inhibition d'émission sont reliées au circuit d'interface 410 qui comprend un émetteur/ récepteur 411 et un transformateur 412 connecté au bus bifilaire 41.

Avant le lancement du missile, le bus 41 est connecté au bus de même type de l'installation de tir par l'intermédiaire de contacts d'un relais 415 dont l'ouverture est provoquée par un circuit de commande 416 en réponse au changement d'état d'un des bits du mot de contrôle contenu dans le registre RCT. C'est par cette liaison que, le cas échéant, la trame des paramètres télémesurés peut être modifiée dans la mémoire EEPROM 46 avant un essai.

En vol, le bus 41 met en communication le calculateur avec la liaison radar missile et l'émetteur de télémesure. Toutes les données susceptibles d'être envoyées à la télémesure sont stockées dans la mémoire d'échange à double accès 49 en provenance de l'unité centrale 10 ou de l'unité de traitement algorithmique 30. La mémoire EEPROM 46 contient les adresses des données à télémesurer et le profil de la trame dans laquelle ces données doivent être transmises.

Le circuit de ligne série 471 comprend un registre tampon de données RTD interposé entre le bus de données 48D et un bus de données interne BDI. A ce dernier sont reliés un registre de contrôle et d'état RCE, un registre tampon d'émission RTE2 et un registre tampon de réception RTR2. Un registre d'émission RE2 à entrées parallèles et sortie série est inséré entre le registre tampon RTE2 et le circuit d'interface 420 tandis qu'un registre de réception RR2 à entrée série et sorties parallèles est inséré entre le circuit d'interface 420 et le registre tampon RTR2. Ces différents registres du circuit de ligne série 471 sont contrôlés par un circuit de contrôle de lecture-écriture (CRW) qui est connecté aux bus de contrôle 48C et d'adresses 48A et est relié à la base de temps 43A.

Le circuit de ligne série 471 décrit ci-avant est classique, de même que les circuits d'interface 420 par l'intermédiaire desquels ils sont reliés au bus 42. Ils pourront par exemple être constitués, respectivement par les circuits référencés 26 LS 31 et 26 LS 32 des sociétés des Etats-Unis d'Amérique MOTOROLA ou TEXAS INSTRUMENTS.

Le circuit logique de déclenchement de charge militaire 475 produit le signal DCM de déclenchement de la charge emmenée par le missile. Il reçoit à cet effet des signaux discrets (tout ou rien), provenant de la fusée de proximité. Ceux-ci valident un circuit de décomptage qui est préchargé à partir du bus 48D à des valeurs correspondant à des retards de déclenchement calculés par l'unité centrale et qui décompte au rythme d'un signal d'horloge provenant de la base de temps 43.

Dans ce qui précède, il a été envisagé d'utiliser un circuit de couplage série pour permettre les communications avec deux liaisons série externes au calculateur. Bien entendu, il serait possible d'utiliser un circuit de couplage par liaison. Il serait aussi possible de réaliser des communications avec plus de deux liaisons serie externes ; ainsi, le circuit de couplage 40 peut avantageusement être utilisé pour relier le calculateur à un système de développement par l'intermédiaire d'une liaison numérique supplémentaire provisoire reliée au circuit logique 47.

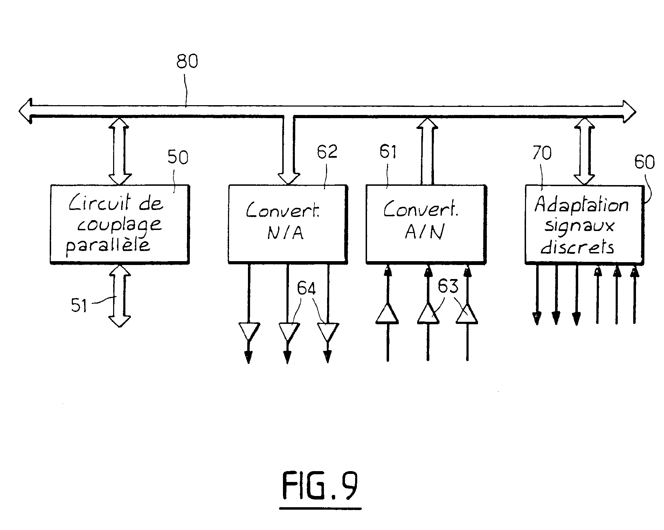

Le circuit de couplage parallèle 50 (figure 9) relie le calculateur au dispositif auto-directeur 2 et au bloc senseur 3 par l'intermédiaire d'un bus parallèle 51, par exemple à 8 bits, qui est géré par le calculateur.

Le circuit de couplage parallèle est du type microprogrammé, la procédure étant contenue dans la mémoire de microprogramme du processeur 11. Les circuits électroniques et d'interface avec le bus 80, constitutifs du coupleur 50, peuvent être groupés dans un circuit intégré.

Le circuit de conversion 60 comprend un circuit convertisseur analogique/numérique 61 et un circuit convertisseur numérique/analogique 62. Les signaux analogiques entrants sont notamment représentatifs des positions réelles de gouvernes et de tuyère, et de valeurs de tension de piles, tandis que les signaux analogiques sortants sont notamment représentatifs des positions de consigne de gouvernes et de tuyère. Des circuits 63, 64, constitués par des amplificateurs opérationnels, assurent l'adaptation et la mise à échelle des signaux analogiques.

Le calculateur traite encore des signaux discrets en entrée et en sortie, les signaux discrets entrants sont par exemple indicatifs de sortie du tube de lancement, de séparation du premier étage (cas d'un missile à plusieurs étages propulsifs), de remise à zéro... Les signaux discrets sortant sont notamment des ordres de mise à feu pour des piles de puissance, le propulseur de croissière ou un générateur de gaz alimentant des tuyères latérales permettant un pilotage. L'adaptation et la mise à l'échelle des signaux discrets entrants et sortants sont réalisées au moyen du circuit d'adaptation 70 utilisant des amplificateurs opérationnels.

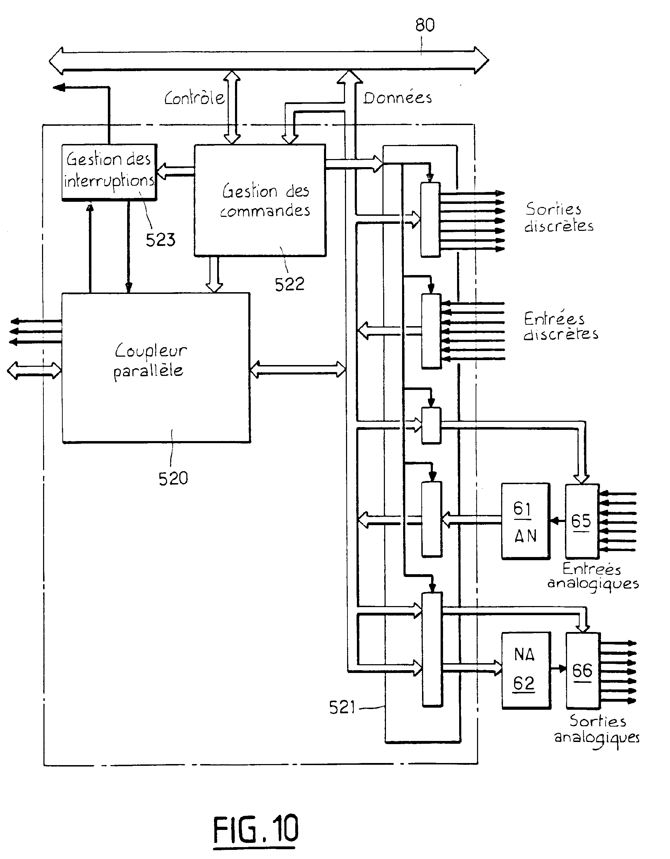

Les éléments constitutifs du circuit de couplage parallèle 50 et des circuits de gestion des signaux analogiques et discrets entrants et sortants peuvent être regroupés dans un même circuit intégré 52 dont le schéma synoptique est donné par la figure 10.

Le circuit intégré 52 comprend :
- un sous-ensemble 520 formant coupleur parallèle qui permet à l'unité centrale 10 de gérer le bus parallèle 51 interconnectant le calculateur, le bloc-senseur 3 et le dispositif auto-directeur 2,
- un sous-ensemble 521 d'entrées/sorties qui permet au calculateur de gérer les signaux d'entrées-sorties spécifiques analogiques et discrets,
- un sous-ensemble 522 de gestion de commandes qui fournit les commandes nécessaires à la mise en forme des signaux externes du coupleur parallèle, et à la réception ou à l'émission de données au niveau des entrées-sorties spécifiques analogiques et discrètes ou au niveau du bus 51, et
- un sous-ensemble 523 de gestion des interruptions qui filtre les interruptions provenant du bloc senseur ou de l'auto-directeur pour les réémettre à l'unité centrale et pour valider la sortie du coupleur parallèle.

Le séquencement des sous-ensembles est assuré par des signaux d'horloge fournis par l'unité centrale et reçus par le sous-ensemble de gestion des commandes 522.

EP 0 441 706 B1

Ce dernier est relié au bus de contrôle faisant partie du bus 80, afin de recevoir des micro-ordres par le biais du champ de contrôle du processeur de l'unité centrale. Ces micro-ordres permettent, après décodage, de générer les commandes contribuant à la gestion des échanges et des interruptions : validation des entrées-sorties, propagation des données fonctionnelles, mise en forme des signaux externes nécessaires à cette propagation.

Le sous-ensemble 523 de gestion des interruptions est connecté au coupleur parallèle 520 pour émettre vers le processeur 11 de l'unité centrale un signal de suspension en réponse à une demande d'interruption provenant d'un abonné du bus 51 (bloc senseur ou auto-directeur). Le processeur 11 adresse alors au alors au sous-ensemble 522 un micro-ordre autorisant la lecture dans le coupleur parallèle 520 des bits identifiant l'abonné qui a sollicité la suspension. Ces bits sont contenus dans un mot de commande stocké dans un registre du coupleur parallèle et sont lus sur le bus de données de l'unité centrale 10, faisant partie du bus 80 et relié au coupleur parallèle 520.

Ce dernier est relié au bus parallèle bidirectionnel 51. Il émet en outre, vers les abonnés, un signal d'horloge, un signal indiquant la présence d'un mot de commande sur le bus 51 et un signal indiquant la présence d'un mot de données sur le bus 51. L'écriture d'un mot de commande, l'écriture de données et la lecture de données sur le bus 51 sont réalisées sous la commande du sous-ensemble 522 en réponse à des micro-ordres reçus de l'unité centrale.

Le sous-ensemble d'entrées-sorties 521 est relié aux entrées et sorties discrètes et analogiques et au bus de données du bus 80.

Les entrées discrètes ont leurs états stockés dans des positions respectives d'un registre du sous-ensemble 521 qui est lu sur le bus de données faisant partie du bus 80 en réponse à un micro-ordre transmis par l'unité centrale et décodé par le sous-ensemble 522. Les sorties discrètes ont leurs états déterminés par des bits stockés dans des positions respectives d'un registre du sous-ensemble 521 qui est chargé à partir du bus de données faisant partie du bus 80 en réponse à un micro-ordre transmis par l'unité centrale et décodé par le sous-ensemble 522.

Les entrées analogiques sont multiplexées au moyen d'un multiplexeur 65 en entrée du convertisseur A/N 61. La voie analogique à lire est sélectionnée par commande du multiplexeur 65 par un mot stocké dans un registre du sous-ensemble 521 en réponse à un micro-ordre transmis par l'unité centrale et décodé par le sous-ensemble 522. La conversion de la donnée analogique et la lecture de la donnée convertie, en sortie du convertisseur, sont ensuite successivement commandées en réponse à des micro-ordres transmis par l'unité centrale et décodés par le sous-ensemble 522. La donnée convertie lue est transférée dans un registre du sous-ensemble 522 pour être transmise sur le bus de données faisant partie du bus 80.

Les sorties analogiques sont démultiplexées en sortie du convertisseur N/A 62 au moyen d'un démultiplexeur 66. Un registre du sous-ensemble 521 stocke un mot dont une partie constitue l'adresse de la voie analogique à activer et une autre partie la valeur numérique du signal de sortie analogue à transmettre sur cette voie. Ce mot est lu sur le bus de données faisant partie du bus 80, en réponse à un micro-ordre transmis par l'unité centrale et décodé par le sous-ensemble 522.

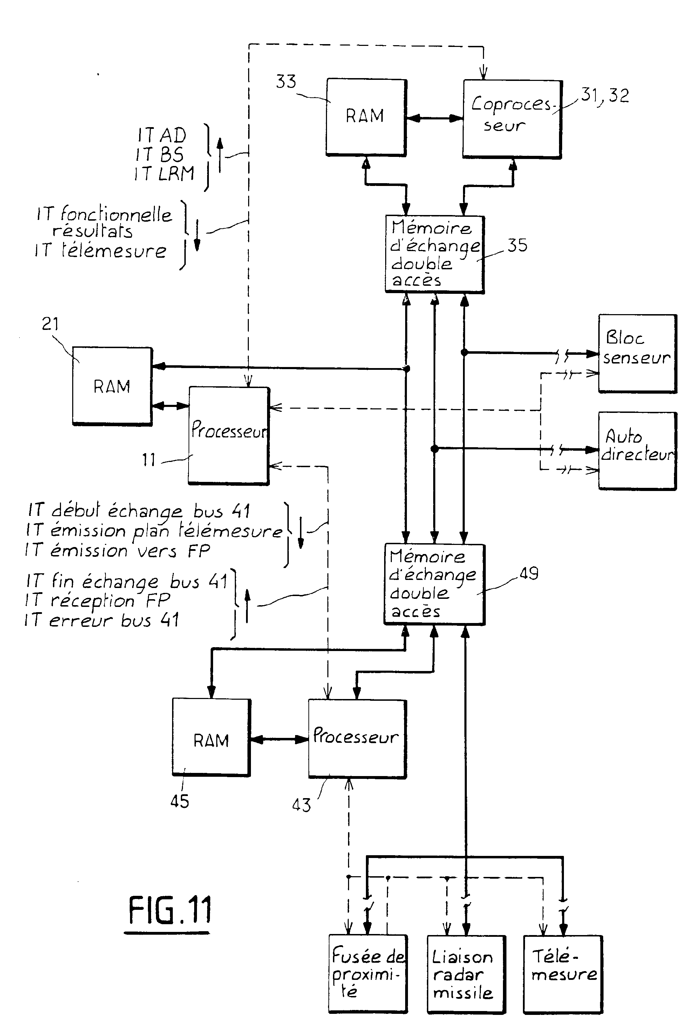

Les échanges entre les sous-ensembles du calculateur sont illustrés par la figure 11 qui montre les chemins de données (en traits continus) et les lignes d'interruption (en traits interrompus) entre ces sous-ensembles.

Le circuit de couplage série 40 permet au calculateur de dialoguer avec la télémesure, la liaison radar missile et la fusée de proximité. L'échange de données entre l'unité centrale 10 et ces trois organes est réalisé par l'intermédiaire de la mémoire double accès 49. Les données sont enregistrées dans celle-ci et la synchronisation entre l'unité centrale 10 et le circuit de couplage série 40 s'effectue par interruptions.

Trois interruptions sont disponibles de l'unité centrale 10 vers le circuit de couplage 40 : interruption de début d'échange avec le bus série 41 (IT début échange bus 41), interruption d'émission de paramètres vers la télémesure (IT émission plan télémesure) et interruption d'émission vers la fusée de proximité (IT émission vers FP). Ces interruptions émises par l'unité centrale sont générées au niveau du circuit de couplage 40 par décodage de micro-instructions de l'unité centrale.

Trois interruptions sont émises par le circuit de couplage 40 vers l'unité centrale 10 : interruption de fin d'échange avec le bus 41 (IT fin échange bus 41), interruption de réception venant de la fusée de proximité (IT réception FP) et interruption erreur sur le bus 41 ou changement de trame des paramètres à télémesurer (IT erreur bus 41 ou changement trame télémesure).

La communication entre l'unité centrale 10 et l'unité de traitement algorithmique 30 s'effectue de manière analogue. Les données sont échangées par l'intermédiaire de la mémoire double accès 35. Les tâches de l'unité 30 représentent l'ensemble des traitements de guidage, de pilotage et de navigation. Elles sont synchronisées sur trois événements externes : réception de données venant du bloc senseur, réception de données venant du dispositif auto-directeur et réception de données venant de la liaison radar missile. Les deux premiers

8

événements ont une fréquence par exemple de 500 Hz et le troisième une fréquence par exemple de 1 Hz. A chacun de ces événements est associée une interruption, respectivement IT AD, IT BS et IT LRM.

Dans le sens inverse, de l'unité de traitement algorithmique 30 vers l'unité centrale 10, deux interruptions sont disponibles par décodage du bus d'adresses lors de l'écriture dans la mémoire double accès. Ces deux interruptions sont une interruption fonctionnelle résultats (IT fonctionnelle résultats) et une interruption de télémesure (IT télémesure).

Il pourrait être prévue une instruction spécifique pour l'unité de traitement permettant de transférer des données directement de la mémoire double accès 35 de l'unité de traitement 30 à la mémoire double accès 49 du circuit de couplage 40, et inversement. De la sorte, des résultats de calculs effectués par l'unité de traitement 30, et représentant des paramètres à télémesurer, peuvent être transmis directement au circuit de couplage 40, pour transmission sur le bus 41, tandis que des données provenant de la liaison radar missile par le bus 41 peuvent être transmises directement à l'unité de traitement 30.

Le bus parallèle 51 permet de dialoguer avec le dispositif auto-directeur 2 et le bloc senseur 3. Les données venant du bus 51 sont stockées directement, par le microprogramme de gestion du circuit de couplage parallèle, dans la mémoire double accès 35, pour être utilisées dans les calculs effectués par l'unité de traitement 30, ou dans la mémoire double accès 49, pour être transmises à la télémesure.

Les entrées/sorties pour signaux discrets et analogiques permettent l'échange de données et de commandes avec divers éléments du missile : gouvernes, piles, tuyères de pilotage, fusée de proximité... Elles sont lues et enregistrées sous la commande de l'unité de traitement 10 par des instructions spécifiques qui échangent des données avec des registres d'entrées/sorties adressés par des micro-ordres.

## Revendications

1. Calculateur de missile, destiné notamment au pilotage automatique du missile, comportant un bus interne (80) comprenant un bus d'adresses et un bus de données, une unité centrale (10) couplée au bus interne et comprenant un processeur central (11) avec un circuit d'horloge, des mémoires (20) associées au processeur central, et des circuits d'entrées/ sorties (40, 50, 60, 70) comprenant au moins un circuit de couplage (40) ayant un processeur (43), des circuits de mémoire (44, 45, 46) associés à celui-ci, au moins un circuit d'interface avec une liaison externe (41, 42) aboutissant au calculateur, et une mémoire à double accès (49) reliant le circuit de couplage au bus interne (80) du calculateur, ces circuits d'entrées/sorties étant destinés à relier le calculateur à des moyens d'émission et de transmission d'informations transmises par voie hertzienne et à des organes du missile, caractérisé en ce que :
   - une unité de traitement algorithmique (30) distincte de l'unité centrale (10) est prévue pour effectuer des calculs rapides, et comprend au moins un processeur (31, 32), des circuits de mémoire (33, 34) associés à celui-ci, et une mémoire à double accès (35) reliant l'unité de traitement algorithmique au bus interne (80) du calculateur, et
   - le circuit de couplage (40) comprend un circuit d'interface avec une liaison externe reliant le calculateur à un dispositif de transmission pour télémesure, et une mémoire (46) non volatile effaçable et réinscriptible destinée à mémoriser des formats de paramètres à télémesurer.

2. Calculateur selon la revendication 1, caractérisé en ce que les mémoires (20) associées au processeur central comprennent une première zone formant mémoire privée du processeur (11) de l'unité centrale et une deuxième zone avec un segment de mémoire formant mémoire d'échange avec la mémoire double accès de l'unité de traitement algorithmique (30) et un segment de mémoire formant mémoire d'échange avec la mémoire double accès du circuit de couplage (40).

3. Calculateur selon l'une quelconque des revendications 1 à 2, caractérisé en ce qu'il comprend des moyens pour transférer des données directement du circuit de couplage (40) à l'unité de traitement algorithmique (30) et inversement.

4. Calculateur selon l'une quelconque des revendications 1 à 3, caractérisé en ce que L'unité de traitement algorithmique (30) comprend une mémoire de programmes (34) contenant les programmes nécessaires à l'exécution des traitements effectués par cette unité.

5. Calculateur selon l'une quelconque des revendications 1 à 4, caractérisé en ce que le circuit de couplage (40) comprend une mémoire de microprogrammes (44) contenant des programmes nécessaires à l'exécution de traitements par le circuit de couplage.

**6.** Missile caractérisé par le fait qu'il est équipé d'un calculateur selon l'une quelconque des revendications 1 à 5.

## Patentansprüche

**1.** Recheneinheit für einen Flugkörper, insbesondere für die automatische Steuerung des Flugkörpers, mit einem internen Bus (80), der einen Adreßbus und einen Datenbus enthält, einer Zentraleinheit (10), die mit dem internen Bus verbunden ist und einen Zentralprozessor (11) mit einer Zeitgeberschaltung aufweist, Speichern (20), die mit dem Zentralprozessor in Verbindung stehen und Eingangs-/Ausgangsschaltungen (40, 50, 60, 70), die zumindest eine Verbindungsschaltung (40) enthalten, die einen Prozessor (43), demselben zugeordnete Speicherschaltungen (44, 45, 46), zumindest eine Schnittstellenschaltung mit einer externen Verbindung (41, 42), die an die Recheneinheit angrenzt und einen Doppelzugriffsspeicher (49) aufweist, der die Schnittstellenschaltung mit dem internen Bus (80) der Recheneinheit verbindet, wobei die Eingangs-/Ausgangsschaltungen zum Verbinden der Recheneinheit mit Sende- und Übertragungsmitteln für Informationen, welche über Funk und Einrichtungen des Flugkörpers übertragen werden, geeignet sind,
**dadurch gekennzeichnet**, daß
- eine zur Zentraleinheit (10) unterschiedliche Einheit (30) zur algorithmischen Datenverarbeitung vorgesehen ist, zum Durchführen von schnellen Berechnungen, wobei die Einheit (30) zumindest einen Prozessor (31, 32), demselben zugeordnete Speicherschaltungen (33, 34) und einen Doppelzugriffsspeicher (35) enthält, der mit der Einheit zur algorithmischen Datenverarbeitung über den internen Bus (80) der Recheneinheit verbunden ist, und
- die Verbindungsschaltung (40) eine Schnittstellenschaltung enthält, mit einer externen Verbindung, die mit der Recheneinheit über eine Meßwertfernübertragungsvorrichtung verbunden ist und weiterhin einen nichtflüchtigen, löschbaren und wiederbeschreibbaren Speicher (46) enthält, zum Speichern von Parameterformaten der Meßwertfernübertragung.

**2.** Recheneinheit nach Anspruch 1,
dadurch gekennzeichnet, daß
die mit dem Zentralprozessor in Verbindung stehenden Speicher (20) einen ersten Bereich enthalten, der einen zum Prozessor (11) der Zentraleinheit gehörenden Speicher bildet und einen zweiten Bereich enthält, mit einem Speichersegment, das mit dem Doppelzugriffsspeicher der Einheit (30) zur algorithmischen Datenverarbeitung im Austausch steht und mit einem Speichersegment, das mit dem Doppelzugriffsspeicher der Verbindungsschaltung (40) im Austausch steht.

**3.** Recheneinheit nach einem oder mehreren der Ansprüche 1 bis 2,
dadurch gekennzeichnet, daß
die Recheneinheit Mittel zur Direktübertragung von Daten von der Einheit (30) zur algorithmischen Datenverarbeitung zu der Verbindungsschaltung (40) und umgekehrt enthält.

**4.** Recheneinheit nach einem oder mehreren der Ansprüche 1 bis 3,
dadurch gekennzeichnet, daß
die Einheit (30) zur algorithmischen Datenverarbeitung einen Programmspeicher (34) enthält, mit Programmen, die zur Ausführung der Datenverarbeitung durch die Einheit notwendig sind.

**5.** Recheneinheit nach einem oder mehreren der Ansprüche 1 bis 4,
dadurch gekennzeichnet, daß
die Verbindungsschaltung (40) einen Mikroprogrammspeicher (44) enthält, mit Programmen, die zur Ausführung der Datenverarbeitung durch die Verbindungsschaltung notwendig sind.

**6.** Flugkörper, der dadurch gekennzeichnet ist, daß er eine Recheneinheit nach einem oder mehreren der Ansprüche 1 bis 5 enthält.

## Claims

**1.** Missile computer, intended particularly for automatic piloting of the missile, including an internal bus (80) comprising an address bus and a data bus, a central unit (10) coupled to the internal bus and comprising a central processor (11) with a clock circuit, memories (20) associated with the central processor, and input/output circuits (40, 50, 60, 70) comprising at least one coupling circuit (40) having a processor (43), memory circuits (44, 45, 46) associated with the latter, at least one circuit for interfacing with an external link (41, 42) arriving at the computer, and a dual-access memory (49) linking the coupling circuit to the internal bus (80) of the computer, these input/output circuits being intended to link the computer to means of sending and of transmitting information transmitted by radio channel and to elements of the missile, characterized in that:

- an algorithm processing unit (30), separate from the central unit (10) is provided for carrying out high-speed calculations, and comprises at least one processor (31, 32), memory circuits (33, 34) associated with the latter, and a dual-access memory (35) linking the algorithm processing unit to the internal bus (80) of the computer, and
- the coupling circuit (40) comprises a circuit for interfacing with an external link linking the computer to a transmission device for telemetry, and a non-volatile, erasable and rewritable memory (46) intended to store formats of parameters to be measured by telemetry.

2. Computer according to Claim 1, characterized in that the memories (20) associated with the central processor comprise a first area forming a private memory of the processor (11) of the central unit and a second area with a memory segment forming a memory for exchange with the dual-access memory of the algorithm processing unit (30) and a memory segment forming a memory for exchange with the dual-access memory of the coupling circuit (40).

3. Computer according to any one of Claims 1 to 2, characterized in that it comprises means for transferring data directly from the coupling circuit (40) to the algorithm processing unit (30) and conversely.

4. Computer according to any one of Claims 1 to 3, characterized in that the algorithm processing unit (30) comprises a program memory (34) containing the programs necessary for executing the processing performed by this unit.

5. Computer according to any one of Claims 1 to 4, characterized in that the coupling circuit (40) comprises a microprogram memory (44) containing programs necessary for executing processing by the coupling circuit.

6. Missile characterized in that it is equipped with a computer according to any one of Claims 1 to 5.

FIG.1

FIG.2

## FIG.3

13  10  11  12      20  21  22  23

| Horloge | Proces-seur | Mémoire micro-program-me | | RAM | PROM | Gestion mémoire |

15 D

15 A

15 C

15

80

F₀      F₁

RAM

PROM

Mémoire d'échange
Traitement
algorithmique

Mémoire d'echange
Circuit de couplage

## FIG.4

FIG.5

30 33 31 32 34

| RAM | Coprocesseur | Program-me |

35 — Mémoire d'echange double accès    36 — Circuit gestion    80

## FIG.6

80

44    43    49    47

| Mémoire micro-program-me | Processeur | Mémoire d'échange double accès | Circuit logique |

48 D

Base de temps

43 A

40

48 A    48 C

RAM    EEPROM

45    46

410    420

41    42

## FIG.7

## FIG.8

**FIG.9**

80

Contrôle   Données

Gestion des interruptions

Gestion des commandes

523

522

Coupleur parallèle

520

Sorties discrètes

Entrées discrètes

61
AN

65

Entrées analogiques

NA
62

66

Sorties analogiques

521

FIG. 10

FIG.11